# EUROPEAN PATENT SPECIFICATION

(11) **EP 3 442 198 B1**
(45) Date of publication and mention of the grant of the patent: **04.11.2020**
(21) Application number: 18187174.0
(22) Date of filing: 03.08.2018
(51) Int. Cl.: H04L 29/06, H04L 29/08

(54) **BI-DIRECTIONAL DATA SECURITY FOR CONTROL SYSTEMS**
BIDIREKTIONALE DATENSICHERHEIT FÜR STEUERUNGSSYSTEME
SÉCURITÉ DE DONNÉES BIDIRECTIONNELLE POUR SYSTÈMES DE COMMANDE

(30) Priority: 08.08.2017 US 201715671870
(43) Date of publication of application: 13.02.2019
(73) Proprietor: Sierra Nevada Corporation, Sparks, NV 89434 (US)
(72) Inventor: Fischer, Peter, Sparks, NV Nevada 89434 (US); Edwards, Joshua A., Sparks, NV Nevada 89434 (US); Shepard, Kyle Andrew, Sparks, NV Nevada 89434 (US); Streander, Kevin Jeffrey, Sparks, NV Nevada 89434 (US)
(74) Representative: Budde Schou A/S

(56) References cited:
- WO-A1-02/075547
- WO-A2-2010/129433
- CA-A1- 2 980 033
- US-A1- 2015 135 254
- US-B1- 9 154 479

## Description

This disclosure relates generally to the field of cybersecurity for control systems. More specifically, in some aspects, it relates to devices and methods for providing secure communications to and from one or more safety-critical control systems, such as those found on aircraft avionics, nuclear power plants, rail systems, ships, and automobiles, and applies to both manned and autonomous vehicles and systems. As an example, avionics control systems may be designed to be isolated, critical networks, but some avionics technologies, such as ADS-B and ACARS, support external communication messages, and have become increasingly important in aircraft operations. These latter technologies demonstrate a need for protecting critical systems from spurious, erroneous, or malicious signals, while still enabling external communications for aircraft operations. To provide adequate protection for these systems against, for example, cyber-terrorism and malicious attacks, a solution must be capable of both interfacing with, and routing data between, a multitude of communication media and protocols, including deterministic/real-time buses as well as non-deterministic and network interfaces, such as, for example, Ethernet, fiber-optics, CANBUS, ARINC-429, ARINC-664, RS-232/422/485, and MIL-STD 1553B. Additionally and advantageously, the solution can take into account the state of physical switches and relays, and digital and analog electrical inputs.

Current state of the art solutions for interfacing between safety-critical control systems, such as avionics, use a unidirectional "data-diode," which is a device designed to provide only a one-way flow of information. This is mostly used to send messages and status data from the protected or safety-critical systems, such as avionics, to other systems. For example, a data-diode can be used for aircraft flight status information on commercial airline flights, providing customers details of the flight on a moving map application that shows where the aircraft is located, along with altitude, speed and time of arrival. In many instances, however, interfaces need to be implemented as bi-directional and therefore require a more sophisticated device that can enable a safe solution for messaging, remote command and control, or other applications required on systems such as a modern aircraft, power plant, transport vehicle, or unmanned system. Increasingly these systems are being operated for uses beyond their original intent, and in many cases they include specific equipment that must be controlled remotely or through networks or interfaces that require bi-directional communication. Further, a solution is needed that can validate and provide cyber security for machine-to-machine (M2M) communications and control messages between two safety-critical devices in a control system without interrupting critical timing on deterministic systems or buses or introducing system instability due to latency of processing the messages. State of the art is e.g. disclosed in CA 2980033 A1, US 2015/135254 A1, US9154479 B2, WO 2010/129433 A2 and WO 02/075547 A1.

Accordingly, a solution has been sought to the problem of ensuring bi-directional cyber-security for safety-critical systems by protecting these critical control devices from both internal and external attacks and threats. "Bi-directional" is understood to encompass both incoming data (data coming into the critical control system or device from an interface, internal or external, with which the system or device is linked), and outgoing data (data communicated from the control system or device to the linked interface).

### SUMMARY

Broadly, in accordance with at least some embodiments of this disclosure, a bi-directional cyber-security device for safety-critical control systems will ideally support processing messages inline between many different interfaces and communications protocols, including deterministic (real-time) and non-deterministic and network messages. Cyber-security devices in accordance with embodiments of this disclosure will thereby provide a solution that can perform a secure "bridge" or "gateway" between different systems, as well as internal and external interfaces and networks. For example, this would enable a system on an Ethernet network to communicate with control systems over interfaces such as ARINC-429, ARINC-664, MIL-STD 1553B, RS-232/422/485 or CANBUS, and to include the incorporation of message translation and interoperability between these different types of networks with byte-by-byte validation of each message, and operational state-based rule sets to provide cyber security for all communications. This provides the efficiency of allowing disparate systems to interoperate and communicate in a simple and effective manner, along with security to ensure that communications can be done safely.

Bi-directional cyber-security devices in accordance with embodiments of this disclosure may advantageously provide protection across all seven OSI model layers by creating an isolation barrier between each safety-critical control device and the networks or interfaces to which they are connected. Alternatively, such cyber-security devices may operate in a fashion that does not encompass all 7 OSI layers, similar to a router or network switch, or at the application level as part of a process, but in all cases they operate with a customizable rule-set programmed into the device for processing inbound and outbound data (commands and messages) at each interface. A cyber-security device according to these embodiments is configured to pass only validated data, and to "sanitize" and/or block data that do not conform to validation criteria established by the rule-set. "Sanitizing" can consist of replacing malicious or malformed data with default values or "last known good" data, depending on user preferences and operational conditions. The rule-set can be customized for each control device and the interfaces it supports, and it can also take into account the entire control system, its operating parameters, and its defined safety limits. Advantageously, in an aspect, separate rule-sets are provided to define how inbound and outbound data are processed, sanitized, blocked, or validated on a per interface basis.

More specifically, a cyber-security device in accordance with embodiments of this disclosure comprises a processor operable to process messages with a data validation rule-set (preferably, but not necessarily, separate data validation rule-sets for inbound and outbound data customized per interface and system); external communication interface(s) configured for bi-directional data communication between the processor and external networks or systems; and internal communication interface(s) configured for bi-directional data communication between the processor and at least one safety-critical control device, wherein the data received by the processor via either the external or internal communication interface is either deleted/blocked, sanitized, or passed by the appropriate rule-set, depending on whether the data conform to validation criteria established by the rule-set. The processor analyzes the data, preferably byte-by-byte, with the data in each byte being required to conform to the rule-set validation criteria before being passed from the processor to the appropriate outgoing interface, with the cyber security device acting as a bridge or data router between internal and external communication interfaces. The processor may also be configured to be re-programmed with new rule-sets, for example during start-up ("re-booting"), but preferably programmatically via a remote or local communications interface. Additionally, the device may be configured in a "learning" mode of operation, in which bi-directional message traffic will be analyzed and a ruleset automatically created and/or updated based on the analyzed message traffic.

In accordance with another aspect of the disclosure, a method of validating data transmitted between a first or internal interface that includes a control device, particularly a safety-critical control device, and second or external interface comprises, in at least some embodiments, (a) providing a processor programmed with a rule-set establishing data validation criteria between the interfaces; (b) communicating data to the processor from one of the interfaces; (c) operating the processor to determine if the data conform to the data validation criteria established by the rule-set; and (d) communicating the data from the processor to the other of the interfaces only if the data conform to the validation criteria.

As will be better appreciated from the detailed description below, a cyber-security device in accordance with the present disclosure provides for inline processing between many different interfaces and communications protocols, thus providing a solution that can perform a secure "bridge" or "gateway" between different systems. For example, this feature would enable a system on an Ethernet network to communicate with control systems over both deterministic (real-time) and non-deterministic interfaces such as ARINC-429, ARINC-664, MIL-STD-1553B, RS-232/422/485, and CANBUS, including incorporation of message translation and interoperability between these different types of interfaces with byte-by-byte validation of each message, and operational state-based rule sets to provide cyber security for all communications. This provides both the efficiency of allowing disparate systems to interoperate and communicate in a simple and effective manner, along with a high degree of security.

It will further be appreciated that the subject matter of this disclosure provides security for protocols and messages that are low-level, deterministic (real-time) communications, in additional to Ethernet and IP networks. Furthermore, the cyber-security innovation disclosed herein may accommodate a broad range of safety-critical protocols, and is therefore able to provide continuous communications for deterministic and safety-critical communication protocols that cannot tolerate "blocked" or "dropped" messages. This is accomplished through state-based processing and the ability to filter, redact, or replace fields in a message, and allowing validated ("safe") content to pass, instead of dropping or blocking the entire message.

Because the cyber security device acts as a gateway and has inputs from a large number of data sources all related to a complex system, the cyber security device must be able to process and a system state "globally" or across the entire system, taking into account system state information from all sources and interfaces for use in processing and validating data through state-based rulesets. Functionally, this means that a system state may be maintained for a critical field on an interface where no state-based ruleset is present, and likewise system state data from a separate interface can be used for processing in state-based rulesets for a separate interface. In this manner the cyber-security device can also compare similar or redundant data sources in building the overall system state.

A method and a device in accordance with this disclosure will be understood to have the capability of interfacing with safety-critical data systems and buses, IP networks, or other required interfaces in a distributed control system, while being flexible enough to support a wide range of current and future applications. It will be apparent that, because cyber-security devices in an accordance with this disclosure are advantageously capable of handling most, if not all, required combinations of deterministic and non-deterministic or network interfaces, they can be fielded in a wide range of architectures in a control system, or even inside a control device. The cyber-security devices disclosed herein can be placed near a safety-critical system (e.g., manned or unmanned aircraft avionics) without being embedded inside the safety-critical system, thereby providing security without requiring expensive and time-consuming certification every time an update to the security system is performed. If required, the cyber-security device can be embedded in a system-critical bus or sub-system to protect data and signals between safety-critical systems, and/or the system, bus, or sub-system whereas in this application, the cyber-security device would be required to be part of a safety-critical certification, where the system handles both safety-critical and non-safety-critical messaging as a part of the overall certified safety critical system.

Because a cyber-security device in accordance with this disclosure validates every byte of message traffic bi-directionally, while advantageously providing protection that encompasses all 7 OSI layers, the device can be fielded to provide boundary security between different security or certification domains (commonly referred to as a cross-domain solution), thus accounting for protection of safety-critical data, as well as security and message integrity as related to security classification levels, for national defense, security, and intelligence operations.

An exemplary application for the subject matter disclosed herein is for blocking malicious commands over maintenance or remote monitoring interfaces on aircraft, particularly commercial aircraft. Modern aircraft have remote monitoring and maintenance interfaces used for system diagnostics, such as engine performance. Some of these interfaces are designed as command and control interfaces, and they enable operations for system testing in addition to monitoring. By placing the cyber security device as a secure avionics "gateway" between the critical systems and these diagnostic networks, and connecting the gateway to the avionics buses for state information, rulesets can be created, such as the following: "If the aircraft is airborne, block all diagnostic or test commands/functions, and only allow reading system status." This enables the same networks to be securely used for ground maintenance as well as airborne monitoring, but it prevents malicious and potentially catastrophic commands from being issued while in flight.

### BRIEF DESCRIPTION OF THE DRAWINGS

Figure 1 is a simplified semi-schematic representation of external networks and systems as well as other control systems connected to a safety-critical control system including a cyber-security device according to the present disclosure;
Figure 2 is a generalized, high-level flow chart representing the outbound flow of data from a safety-critical control device, wherein the data are validated by a cyber-security device in accordance with an aspect of this disclosure;
Figure 3 is a generalized, high-level flow chart representing an inbound flow of data to a safety-critical control device, wherein the data are validated by a cyber-security device in accordance with an aspect of this disclosure;
Figure 4 is a diagrammatic representation of an embodiment of a cyber-security device in accordance with the present disclosure;
Figure 5 is a flow chart representing the steps of validating data in accordance with one aspect of the present disclosure;
Figure 6 is a flow chart representing the steps of validating data in time-critical and real-time messages in accordance with one aspect of the present disclosure;
Figure 7 is a flow chart representing the steps of validating data in accordance with another aspect of the present disclosure;
Figure 8 is a flow chart representing the steps of validating data in time-critical and real-time messages in accordance with another aspect of the present disclosure.

### DETAILED DESCRIPTION

The following detailed description describes the present aspects with reference to the drawings. In the drawings, reference numbers label elements of the present aspects. These reference numbers are reproduced below in connection with the discussion of the corresponding drawing features.

It will be understood that any of the aspects described with reference to the figures may be implemented using software, firmware, hardware (e.g., fixed logic circuitry), or a combination of these implementations. The terms "logic," "module," "component," "system," and "functionality," as used herein, generally represent software, firmware, hardware, or a combination of these elements. For instance, in the case of a software implementation, the terms "logic," "module," "component," "layer," "system," and "functionality" represent executable instructions that perform specified tasks when executed on a hardware-based processing device or devices, such as, for example, a CPU, a programmable logic device, a field-programmable gate array (FPGA), and/or an application-specific integrated circuit (ASIC). The program code can be stored in one or more non-transitory, computer- readable or system-readable memory devices, or it may be executable as an integrated part of programmed logic or a custom circuit.

More generally, the illustrated separation of logic, modules, components, systems, and functionality into distinct units may reflect an actual physical grouping and allocation of software, firmware, and/or hardware, or it can correspond to a conceptual allocation of different tasks performed by a single software program, firmware program, and/or hardware unit. The illustrated logic, modules, components, systems, and functionality may be located at a single site (e.g., as implemented by a processing device), or may be distributed over a plurality of locations. The term "machine-readable media" and the like refers to any kind of medium for retaining information in any form, including various kinds of storage devices (magnetic, optical, solid state drive (SSD), flash memory, etc.).

The aspects disclosed herein may be implemented as a computer process (method), a computing system, or as an article of manufacture, such as a computer program product or computer-readable media. The computer program product may be embodied or implemented as non-transitory, computer storage media, readable by a computer device, and encoding a computer program of instructions for executing a computer process. The computer program product may also be readable by a computing system, and encoding a computer program of instructions for executing a computer process.

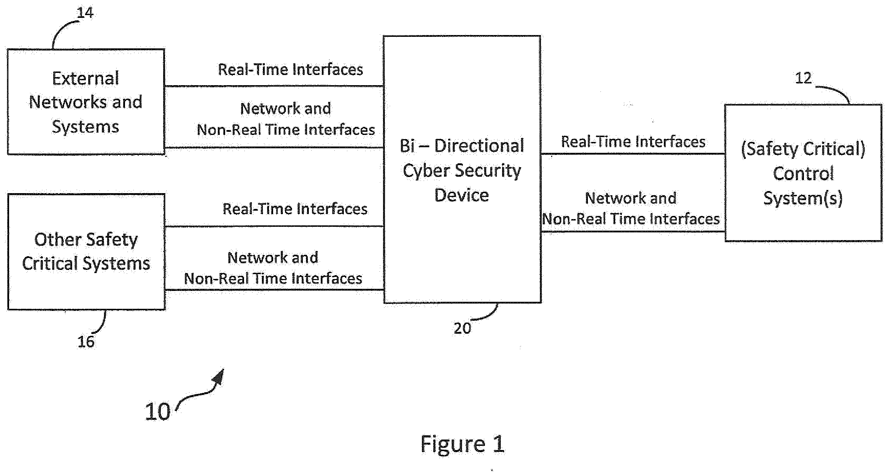

Figure 1 shows a safety-critical control system 10 that includes one or more control devices 12, one or more of which may be a safety-critical control device. Each safety-critical control device 12 is linked to one or more external networks, systems, or interfaces 14 and/or other safety-critical systems or interfaces 16 (hereinafter collectively referred to as "secondary systems") via either a deterministic (time-critical or real-time) or non-deterministic (non-time-critical or non-real-time) network, medium, or protocol or a combination of these communication interfaces. Interposed between, and operatively linking, the secondary systems 14, 16 and the control device(s) 12 is at least one cyber-security device 20, in accordance with this disclosure. The cyber-security device 20, which will be described in detail below, is installed between the secondary systems and the control device(s) 12, whereby all data communicated to or from each control device 12 passes through, and is processed by, a cyber-security device 20, as will be described below. In some embodiments (depending on system architecture), a single cyber-security device 20 may be operationally associated with each control device 12, but other configurations (e.g., multiple control devices connected to an external network, or multiple control devices connected to each other) may be suitable, depending on the particular application. Thus, a system may be configured, for example, with one cyber-security device 20 operationally associated with two or more control devices 12. In an aspect, the cyber-security devices are transparent to the system and would not impact the system's normal operation.

In an aspect, a cyber-security device 20 includes a programmable rule-set that provides one or more rules for handling messages that are sent through it. In an aspect, a rule-set comprises configuration settings loaded into a specific location in memory or device storage, through either a file or a programming interface (internal or external). Alternatively, and advantageously, a cyber-security device can be fielded to automatically build a rule-set when operated in a "learning mode" through processing all traffic in the system and using message analysis, heuristics, and/or other algorithms, such as machine learning. Accordingly, the rule-set can be customized for each control device 12 and the overall control system with which the cyber-security device 20 is associated. A rule-set may include static rules, such as "allow" or "deny" based on the message protocol, content, interface, or destination. A rule-set may also include dynamic rules that use variables that can be assigned to message data fields, registers, system time, or other operational parameters. In this manner, large numbers of "static rules" may be condensed into smaller rule-sets. For example, a dynamic rule may allow messages over a range of message data addresses or command sequences only during certain times of day, and another range of message data addresses or command sequences during a different time of day. The cyber-security device 20 may be configured, in an aspect, to allow only limited changes to its configuration, such as the rule-set and network settings. In an aspect, all other data locations may be restricted from change to provide more security to the operation of the cyber-security device.

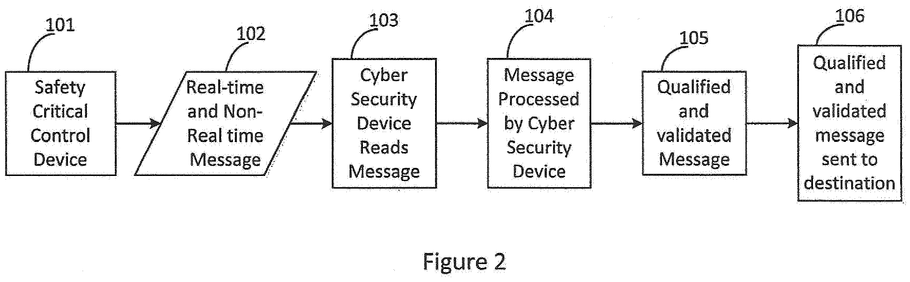

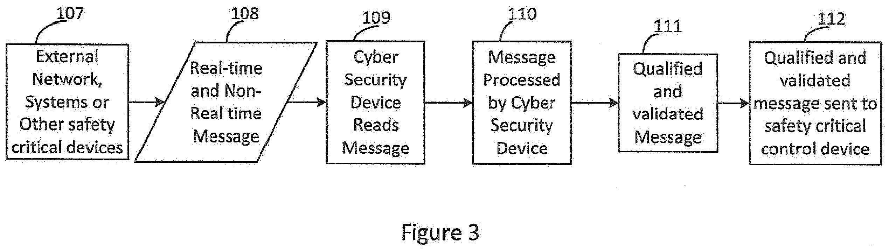

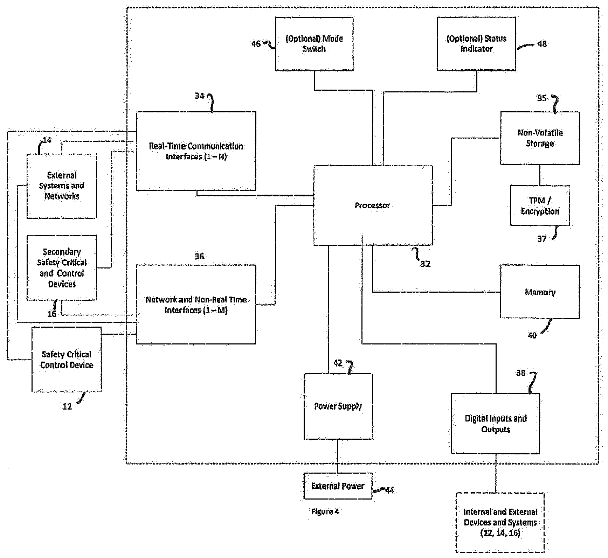

Figures 2 and 3 show generally the flow of data into and out of a cyber-security device 20. In Fig. 2, outbound data (information and/or messages) to a secondary system are generated (step 101) by a control device 12. The outbound data may represent status information and/or messages 102 acquired by the control device 12, or it may include commands to control secondary safety-critical and/or standard control systems on any connected interface. Additionally, the outbound data may represent or include the same or similar data types from external sources and/or systems, including secondary safety-critical systems. The data from the control device 12 are received by the cyber-security device 20 (step 103) through a communication interface, which can either be in real-time (deterministic) or other than real-time (non-deterministic). The data are then processed (step 104) by the cyber-security device 20, first to screen out any data deemed invalid or malformed ("unqualified" data) based on a rule-set in accordance with a predefined protocol that is established by a schema, rule-set, or other configuration in the cyber-security device 20, or advantageously generated automatically if the cyber-security device is operating in a learning mode. Any unqualified data are blocked or deleted (dropped), and a corresponding event log entry may advantageously be created and/or output over a logging interface (not shown). Well-formed ("qualified") data are then validated against the rule-set established by the security software to assure compliance with the data validation criteria established by the rule-set. For non-deterministic messages, any data that are not in compliance with the validation criteria are deleted or blocked, and an event log entry may advantageously be created and/or output. For deterministic or real-time messages, data that are not in compliance with the validation criteria are replaced or removed, so that the message is sanitized and safe for transmission to or from the safety-critical control device. In this manner, the cyber security device ensures that, for all communication interfaces, only data that are validated by compliance with the validation criteria are passed (step 105) to a protected secondary communication interface and then to a recipient system or device (step 106).

The processing of step 104 may also serve another purpose with respect to messages sent from a safety-critical control device. Because the cyber-security device 20 processes every byte of data in a message, it can "understand" and store the state of the control device that sent the message. In general, in some aspects, a safety-critical control device, and the overall control system in which it is fielded, may operate as a state machine, meaning that it must be in one of a finite number of conditions or states at any given time. In such a system, the control device operates under a particular set of rules allowed in that current state until conditions cause the control device to transition to a new state. In that new state, a different set of rules may apply. As such, in an aspect, the cyber-security device may use data from within the control device messages and the overall state of the control system to use that in the validation of messages, such as commands, accordingly.

For example, certain messages may communicate the values of state status (e.g., temperature or pressure) associated with the control device or the control system, or additional digital or analog relays or other inputs may communicate critical states (e.g. aircraft weight on wheels in an exemplary avionics system). When these states are deemed important to overall control system safety, the cyber-security device 20 may maintain these state-indicative values in memory, such as a variable data field in an executable command or program, and update a copy of each such value for use in processing and validating messages over any interface in the system. These state variables may be stored in registers, volatile and/or non-volatile memory, or the like. In one aspect, it is preferred that any state variable data be updated only after the message is qualified and validated. In other aspects, however, state variable data may be processed simultaneously with other processing or in another order. In an aspect, therefore, the state-based rule-sets operate at the OSI layer 7 (application layer) by looking at the value of variables indicating the device or system state. Other OSI layer states, such as session and transport, can also be considered to provide further information on the source of the data.

As will be described in more detail below, the cyber-security device 20 may seek to store this state data in order to factor in the state of the control device 12 when processing and validating messages, as some messages may be allowed or denied only in specific situations. Additionally, the cyber-security device may use this state data either in real time or though building historical data models to refine its learning mode of operation so as to build and refine rule-sets autonomously Updating the state variables based on processing conforming messages allows the cyber-security device 20 to remain transparent in the sending and receiving of messages. Typically in such systems, the control device 12 is being polled by an external system or another device at regular intervals during normal operation, whereby the cyber-security device 20 is likely to have relatively accurate state information simply from reading the contents of the responses of the control device 12. In another aspect, the cyber-security device 20 may poll a control device 12 or one or more other connected devices to maintain or refresh required system state variables by generating its own data request messages. In some cases, this is a less desirable-but still functional-method of operation.

In Fig. 3, the secondary system, interface, or device (step 107) generates inbound data 108 that are received by a cyber-security device 20 (step 109) via a communication interface and then processed (step 110), as described above with reference to step 104 in Fig. 2. Only data that are validated by compliance with the validation criteria are passed (step 111) to a protected secondary communication interface (described below) and then to the designated control device 12 (step 112). While the state of one or more control devices 12 is more likely to be of importance in processing messages through a cyber-security device 20 than the state of a secondary control device or system, state variable data information may also be processed from messages directed to a control device 12 in a manner as described above with respect to Figure 2.

Figure 4 schematically illustrates an instantiation of the cyber-security device 20 as installed in a safety-critical control system. In an aspect, as illustrated, the device 20 includes at least one processor 32 that communicates with an external system 14 and/or a secondary safety-critical control device 16 by means of one or more real-time (deterministic) communication interfaces 34 and one or more network and non-real time (non-deterministic) communication interfaces 36, and with a safety-critical control device 12 by means of the same communication interface(s) 34 and 36. The communication interfaces 34, 36 may employ Ethernet (which includes 100 Base-T and/or Gigabit Ethernet) or fiber (for example) as a non-deterministic communication protocol, or they may use any of several deterministic communication protocols, such as, for example, ARINC-429, CAN-BUS, and MILSTD-1553B. In an aspect, the processor 32 may be understood as including memory 33 and non-volatile storage 35 with which a processor module communicates. For example, either or both of the memory 33 and the non-volatile storage 35 may optionally be included with the processor 32 in a microcomputer, ASIC, or FPGA, as is well known, or they may be separate components. The non-volatile storage 35 may include a TPM/Encryption module or functionality 37. In an aspect, power is provided by a DC power supply 42, connectable to any suitable external power source 44, that converts the voltage from the source 44 to a voltage suitable for operating the electronic components of the cyber-security device 20.

The one or more processors 32, also known as central processing units (CPUs), may be, or may include, one or more programmable general-purpose or special-purpose microprocessors, digital signal processors (DSPs), programmable controllers, application specific integrated circuits (ASICs), programmable logic devices (PLDs), FPGAs, or the like, or a combination of such hardware devices. In an aspect, the processor 32, non-volatile storage 35 and/or memory 33 may be combined in a system-on-a-chip (SoC) configuration, such as those commercially available based on ARM or x86 designs. In other aspects, memory 33 and/or storage 35 may be separate components.

Each of the processors 32 executes machine-implemented instructions (or process steps/blocks) out of memory 33. In an aspect, processor 32 communicates with the other components through one or more interconnects (unlabeled) that may be referred to as a computer bus or set of computer buses, as is well-known. A computer bus may be, for example, a system bus, a Peripheral Component Interconnect (PCI) bus, a PCI-Express (PCIe) bus, a HyperTransport or industry standard architecture (ISA) bus, a SCSI bus, a universal serial bus (USB), an Institute of Electrical and Electronics Engineers (IEEE) standard 1394 bus (sometimes referred to as "Firewire"), or any other type of bus. It is preferable that each processor 32 sits between separate buses to connect to external and internal communication interfaces 34, 36, such that the processor 32 cannot be bypassed by any direct path between the secondary system/devices 14, 16 and the control device 12.

The storage device 35, which may be or include, for example, a hard disk (HDD), a CD-ROM, a non-volatile memory device such as flash, a hybrid drive (sometimes referred to as SSHD), or any other storage device for storing persistent, structured or unstructured data. Storage 35 may store operating system program files (or data containers), application program files, and one or more rule-sets in the form of scripts, functions, programs, configuration files or other file types. In an aspect, storage 35 may also include a data file or data structure that maintains indications of device states as described herein.

Memory 33 also interfaces with the processor(s) 32 with access to memory storage. Memory 33 may include any suitable type of random access main memory (RAM) for example. When executing stored computer-executable process steps from storage 35, the processor(s) 32 may store and execute the process steps out of memory 33. Read only memory (ROM, not shown) may also be used to store invariant instruction sequences, such as startup instruction sequences or basic input/output system (BIOS) sequences for operation of a keyboard (not shown). In an aspect, memory 33 may include a data structure storing device state indications as described herein for use when processing messages with a state-varied rule-set, as described below.

As discussed above, each processor 32 is programmable with a rule-set that validates both inbound data that is received from the external systems via real-time communication interfaces 34 or non-real time interfaces 36, and outbound data that is received from protected communication interfaces included in the interfaces 34 and 36. In an aspect, as mentioned above, inbound and outbound data are processed by their respective rule-sets that may be simultaneously or separately programmed into the processor(s) 32. Programming and re-programming are accomplished via the appropriate communication protocol through at least one of the external interfaces 34, 36 when the cyber-security device 20 is in a programming mode initiated by the activation of a mode switch 46. In another aspect, programming and reprogramming are accomplished via one of the communication interfaces 34, 36 when an approved action enables reprogramming, such as activation of a programming mode, or a validated user identification received via one of the external communication interfaces 34, 36. In a preferred embodiment, the mode switch 46 may be a physical (i.e., hardware) switch that can be actuated manually. For example, the mode switch 46 may comprise a button, lever, plunger, blade, or the like that can be accessed by a tool (not shown) inserted through an aperture in the housing (not shown) containing the electronic components. In other aspects, the mode switch 46 may include a fingerprint scanner or other biometric security device. Thus, any alteration, whether benign or malicious, of the operational software of the cyber-security device 20 preferably requires physical access to the cyber-security device 20. Alternatively, the mode switch 46 may be a logical switch activated through a remote or local communication interface. In still another aspect, the device can be operated in a learning mode and thus fielded to automatically build and modify a rule-set through processing all traffic in the system, and using message analysis, heuristics, and other algorithms, such as machine learning. In the learning mode, the system can be updated continuously and automatically without the need for the programming mode or any external interface, or it can be combined with other modes of operation and authentication, if required. Furthermore, learning mode can be implemented completely in non-volatile memory and with no permanent record so that the security device can be fielded so that that it will not store any critical or secure information about the system it is protecting.

Initiation of the programming mode allows the processor(s) 32 to upload a digitally-signed rule-set received through a remote or local interface. In an aspect, digital authentication may occur through the use of public and private keys. For example, when a cyber-security device is built or set up initially, the process may include burning in a public key. Preferably this key is located in ROM or other memory that cannot be overwritten. In an aspect, updating a rule-set then may require both knowledge of an associated private key to complement the public key and physical access to the cyber-security device 20 and its programming switch 46. If a rule-set is uploaded without the correct private key signature, the device 20 may generate an error, abort the upload process, delete the attempted rule-set upload, and/or the like.

After uploading the rule-set file, in an aspect, the cyber-security device 20 is allowed to go through a complete power cycle to enter its operational mode as programmed with the new rule-set. In another aspect, the cyber-security device 20 can validate and apply the new rule-set without rebooting the processor 32, to minimize any impacts on operations. An optional status indicator 48 (preferably a visual indicator such as an LED) may optionally be employed to indicate whether the device 20 is in the programming mode or the operational mode.

As can be seen from Figure 4, preferably the real-time communication interface(s) 34 and the non-real time or network communication interface(s) 36 are physically and electrically isolated from each other, and can communicate with each other only through the processor(s) 32. This assures that data cannot pass to or from the control device(s) 12 without being validated by the rule-set(s) programmed into the processor(s) 32, thereby providing data security that encompasses all seven OSI model layers (physical, data link, network, transport, session, presentation, and application). In some applications, however, where it may be advantageous to operate as a router or the like, the cyber security device can be implemented with only a subset of OSI model layers, for example without physical or electrical isolation, or as a complement to an existing system or architecture that requires only specific layers to be protected.

The functional components of the cyber-security device 20, as described above, are housed in an enclosure (not shown) that is advantageously made of a suitable metal alloy, such as, for example, aircraft grade 6061-T6 aluminum alloy. The above-described electronic components can be advantageously potted or otherwise physically or electronically protected to provide a certain level of anti-tamper protection. In other instances, the above-described functional components can be combined with other systems or components to create a cyber security solution that is combined with a control system or other system.

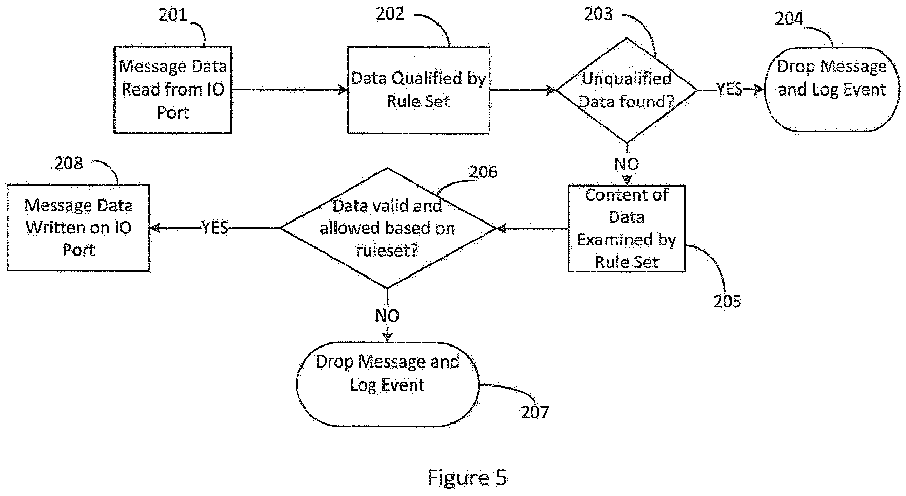

Figure 5 is a data flow diagram for exemplary data validation software used in an embodiment of the cyber-security device 20. This embodiment is advantageous for processing standard messages that are not deterministic (i.e., not "time-critical"), as explained below, and that do not include state-based information. A data message is read (step 201) from a first input/output (I/O) port operationally associated with, for example, a non-real time communication interface 36 or a real-time interface 34 connected either to internal or external systems, depending on whether the data message is inbound or outbound relative to the safety-critical control device. After the data inputted to the I/O port are read, the data are qualified (step 202) (preferably byte-by-byte) by a rule-set, as described above, to determine the presence of malformed or unexpected data ("unqualified" data). If any unqualified data are found ("YES" in decision step 203), such data are deleted, and a log event occurs (step 204). If no such unqualified data are found ("NO" in decision step 203), the content of the qualified data is examined in accordance with the rule-set (step 205) to determine compliance with the validation criteria. If non-compliance is determined ("NO" in decision step 206), the data are deleted, and a log entry is created (step 207). If the data are found to be compliant with the validation criteria, i.e., the data are determined to be valid ("YES" in decision step 206), the data may optionally be modified (as needed) in accordance with any further criteria that may be established by the rule-set, then written (step 208) on a second I/O port operationally associated with the destination communication interface (of the interfaces 34, 36), and finally output from the I/O port to the appropriate communication interface.

An exemplary rule-set that may be used in some embodiments of this disclosure may be generically described as including the following logical processes operating on message data read from an I/O port:

In the first process, the message is qualified by reading the message header to determine and verify message characteristics such as, for example, the message type, and the expected message length, and the message version, to validate integrity of the message. This process includes (a) reading the Start of Message byte sequence where applicable; (b) reading N bytes (where N is the number of bytes defined in the rule-set for that message format), indicating the start of the message that comprises the header, if applicable; and (c) verifying that the header is valid, that there are no illegal values or extra characters in the message, and that all required fields are present and match requirements defined in the message protocol and the rule-set. In another aspect, ASCII messages such as XML may be processed-in a first process-by verifying delimiters or custom delimiters or message criteria to determine message validity as described above.

In an aspect, the first process also advantageously includes comparing the total size of the data read to the message packet size specified in the header or associated data headers as defined in the message schema to assure that no extra data have been inserted, that no required fields are missing, and that no potential data overflows are possible.

In the second process, the contents of the message payload data are looped through to assure that only allowed fields are present in the message and that they conform to limits defined in the rule-set. This process includes repeating a sequence of sub-steps through the entire contents of the message data payload or until an invalid data value or field is detected, or the total amount of data read matches or exceeds the expected message packet size. The sequence of sub-steps comprises: (1) reading M bytes that comprise a data field identifier; (2) reading the value and contents of the data field; (3) assuring that the data field is allowed by rule-set; and (4) if allowed, assure that the values of that data are within limits and ranges defined in the rule-set.

In the second process, for example, the message data may be processed to determine if the type of message is allowed and whether or not values or fields within the message are within allowed limits for that message, as defined by the rule-set. For example, in a particular application, the cyber-security device could be applied to protect a safety-critical control device for avionics. In an aspect, the avionics control device may allow various commands to control the operation of the aircraft's engines, control surfaces (e.g., flaps, rudder, elevators), and cabin environment. In such an application, a cyber-security device 20 may be programmed to review incoming messages and determine that they are properly formed, are of the right size, and the like. Furthermore, the actual contents of the messages may also be analyzed for compliance with a rule-set. For example, the cyber-security device 20 will ensure that no extra data are tacked onto the message that could be interpreted improperly by the avionics control device according to a first process. According to a second process, the cyber-security device 20 may also determine if message data values, such as function parameters, are within operating limits according to the rule-set. For example, in one rule-set, changes in engine speed might be required to occur in increments of between 100 and 300 rpm. In such a case, if an "increase engine speed" message is processed with a parameter indicating a change of 200 rpm, it is allowed as within the rule-set. On the other hand, if the "increase engine speed" message included a parameter indicating a change of 500 rpm, it may be dropped as seeking a change that is outside what are deemed safe limits of operation based on the system's rule-set.

The above-described generic rule-set-and the specific example-are exemplary only and are not limiting. Variations and modifications of a rule-set will readily suggest themselves for particular applications. Rule-sets may be based on any of a variety of message processing rules, including message type, message size, message contents, message source, message destination, message protocol, system time, data rate, system state, the data type and values of message contents, and the like. Moreover, rule-sets may allow for variance based on outside input apart from the message contents itself.

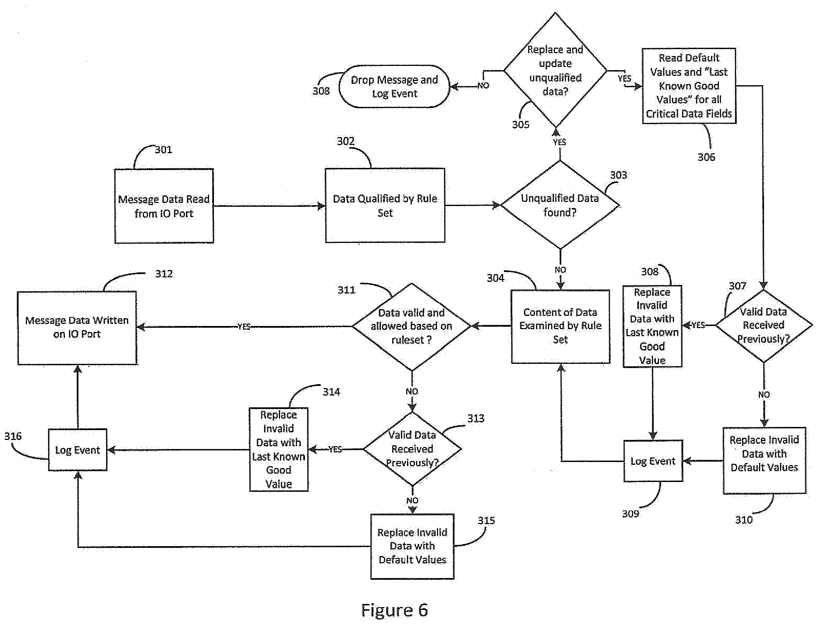

Some control systems and interfaces require the management of synchronized or deterministic communications between the safety-critical control device and external systems/devices or secondary safety-critical control systems. Such systems, for example, may "expect" a timed sequence of messages at predetermined intervals, e.g., 10 msec or 20 msec. Such messages are commonly referred to as "deterministic" or "time-critical," and must be passed continuously in some form to assure proper system functionality. In other words, for such time-critical messages, blocking or dropping the message may result in errors or problems in the overall control system. Therefore, if the message, as initially formed, cannot be validated by the rule-set, it must be altered in a way that makes the message compliant with the rule-set (i.e., "sanitizes" the message), and then passing the sanitized message through to the recipient device or system. The alteration may be by way of redaction (deletion of the offending data), and (optionally) replacement of the deleted data with a predetermined default value, or (optionally) the last known compliant ("good") data value for that field. A flow chart of an exemplary algorithm for software to handle such time-critical messages is shown in Fig. 6.

As in the algorithm discussed above and shown in Fig. 5, a data message is read (step 301) from a first input/output (I/O) port operationally associated with either a non-real time communication interface 36 or a real-time interface 34 connected either to internal or external systems, depending on whether the data message is inbound or outbound relative to the safety-critical control device. After the data inputted to the I/O port are read, the data are qualified (step 302) (preferably byte-by-byte) by a rule-set, as described above, to determine the presence of malformed or unexpected data ("unqualified" data). If no such unqualified data are found ("NO" in a first decision step 303), the content of the qualified data is examined in accordance with the rule-set (step 304) to determine compliance with the validation criteria. If unqualified data are found ("YES" in the first decision step 303), another decision is then made, in a second decision step 305, whether to replace and update the unqualified data (YES), or to drop the message and log the event (NO). If the decision in the second decision step 305 is YES, default values and/or the last known good values for all critical data fields are read from memory (step 306) and input to a third decision step 307, which determines the presence of a last-known "good" message (i.e., a message with rule-set compliant data values). In some cases, it may be desired to block malformed or unqualified messages in a time-critical system, thereby resulting in the decision in the second decision step 305 being NO, in which case the message is deleted or dropped (step 308) and (optionally) the event is logged.

If a last known "good" value for the required fields is available from memory and/or the processing of previous messages ("YES" in the third decision step 307), it is used to replace the corresponding unqualified or invalid data value(s) in the message (step 308), and a log entry may advantageously be created (step 309). If a last-known "good" value is not available ("NO" in the third decision step 307), the invalid or unqualified data value is replaced by a default value retrieved from memory (step 310), and a log entry may advantageously be created (step 309). In some instances it may be advantageous for the system to use machine learning and heuristics that may combine or interpret previous data sets to assist in the process of data replacement and determination of "last know good" values. This could take into account multiple data sources to provide redundant solutions for data replacement, or utilize data fields that are common with other interfaces or protocols as replacement data. Thus, after either step 308 (replacement of unqualified data with a last-known "good" value) or step 310 (replacement with a default value), the message is now deemed "qualified." The qualified message content is now validated, preferably byte-by-byte, in accordance with the rule-set (step 304). If the data are found to be compliant with the validation criteria established by the rule-set, i.e., the data are determined to be valid ("YES" in a fourth decision step 311), the data may optionally be modified (as needed) in accordance with any further criteria that may be established by the rule-set, then written (step 312) on a second I/O port operationally associated with the destination communication interface, and finally output from the I/O port to the appropriate communication interface.

If, on the other hand, data in the message are found to be non-compliant with the validation criteria ("NO" in the fourth decision step 311), a fifth decision step 313 is implemented, in which it is determined whether valid data (i.e., compliant with the validation criteria) have been previously received. If "YES," the non-compliant (i.e., "invalid") data are replaced by the last known corresponding "good" or valid data values (step 314), and the message is written on the appropriate I/O port (step 312). A log entry may advantageously be created (step 316). If valid data have not previously received ("NO" in the fourth decision step 313), the invalid data are replaced by the corresponding default data values (step 315), and then written on the appropriate I/O port (step 312). A log entry may advantageously be created (step 316). As mentioned previously, in some instances it may be advantageous for the system to use machine learning and heuristics that may combine or interpret previous data sets to assist in the process of data replacement and determination of "last know good" values. This could take into account multiple data sources to provide redundant solutions for data replacement, or utilize data fields that are common with other interfaces or protocols as replacement data.

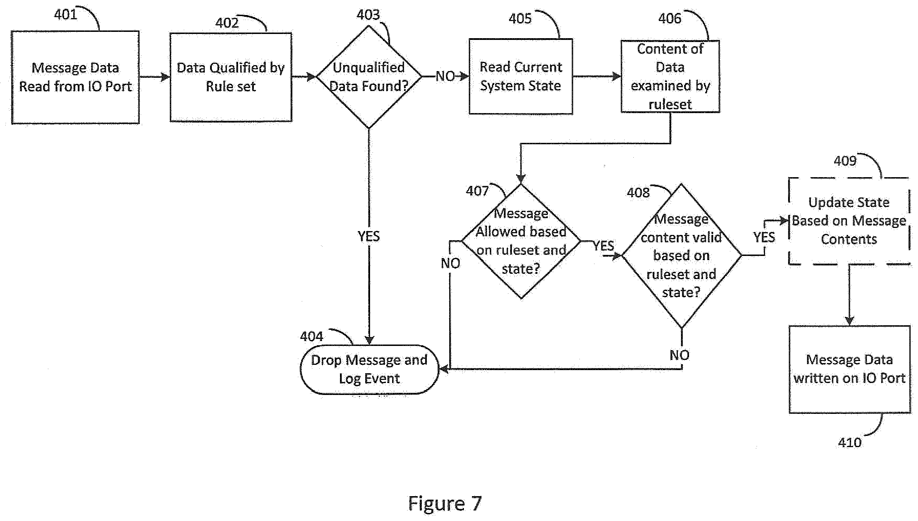

In an aspect, for example, the rule-set can further be programmed to take device state into account when processing messages. While this will often come from the state reported by the safety-critical control device 12, it can also take into account the states of multiple control devices 12, a control device state, external device/system states, internal device states, combinations or the same, and the like. Figure 7 illustrates a sample data flow process that includes analyzing messages in light of system states.

As illustrated, in an aspect, a data message is read from an I/O port (step 401). This may comprise a message from an I/O port operationally associated with either a non-real time communication interface 36 or a real-time interface 34 connected either to internal or external systems, depending on whether the data message is inbound or outbound relative to the safety-critical control device. After the data message input to the I/O port is read, the data message is analyzed in a first process (step 402) (preferably byte-by-byte) by a rule-set, as described above, to determine the presence of malformed or unexpected data ("unqualified" data). If malformed or unqualified data are found ("YES" in a first decision step 403), the message is deleted, and a log event may be created (step 404). If no such malformed or unqualified data are found (i.e., the data are well-formed), the decision in step 403 is "No", and the process continues to step 405, in which system state data are read from memory 33 or storage 35 as needed. As described above, in an aspect, the state data are gleaned from a variety of sources, including previous messages, from the safety-critical control device 12 or other devices or sources, that are processed through or connect to the cyber-security device 20. In another aspect, the cyber-security device 20 may further be able to poll connected devices for state information, but this additional communication traffic may be less desirable or unnecessary. In yet another aspect, the cyber-security device may use machine learning analysis of historical messages, and data analysis and correlation to determine aspects of the system state using inputs.

The qualified data of the message content are then examined in accordance with the rule-set and in light of the system state data read from memory (step 406), and the process proceeds to a second decision step 407 to determine whether the message is allowed at that time. If the message is not allowed at that time ("NO" in the second decision step 407), the message and data are deleted, and a log entry may be created (step 404). If the message is allowed ("YES" in the second decision step 407), the content of the allowed message is examined in accordance with the rule-set and the current system state data (third decision step 408) to determine compliance with the validation criteria. If non-compliance is determined ("NO" in the third decision step 407), the message and data are deleted, and a log entry may be created (step 404). If the data are found to be compliant with the validation criteria in light of the system state data, i.e., the message data are determined to be valid ("YES" in the third decision step 408), the message data may optionally be used to update the system state data stored in the cyber-security device 20 (step 409). Then the message is written (step 410) to a second I/O port operationally associated with the destination interface among the interfaces 34, 36, and finally outputted from the I/O port to the destination interface. As mentioned previously, in some instances it may be advantageous for the system to use machine learning and that may combine or interpret previous data sets to assist in the process of data replacement and determination of "last know good" values. This could take into account multiple data sources to provide redundant solutions for data replacement or utilize data fields that are common with other interfaces or protocols as replacement data.

In a specific example, a safety-critical avionics control device in accordance with this disclosure that is controlling an aircraft engine speed may have, as a state, the current engine speed. In normal operation, for example, an external system may poll the avionics control device for the engine speed at periodic intervals. This will cause a message to be returned from the avionics control device that includes the current engine speed. As the cyber-security device processes this return message, it may make a copy of the current engine speed reading as a part of the current system state. The rule-set may then be set up to allow or deny messages based on the engine speed state variable. For example, a rule-set may include a rule that indicates "increase engine speed" or "decrease engine speed" messages are only acceptable when the current engine speed is outside of a normal range, such as between 5000 and 8000 rpm. When a proper "report engine speed" message is sent through the cyber-security device to the avionics control device, the cyber-security device passes along the request and receives the response message from the avionics control device. In an aspect, the cyber-security device may process the response message and save the current reading for engine speed that is being reported-for example, 7000 rpm. If the cyber-security device then receives an "increase engine speed" message, it can review the current engine speed state reading and deny the message.

In another example, in a particular application, the cyber-security device could be applied to protect a safety critical control device for avionics in a particular way only when the aircraft is airborne, and in a different way when the aircraft is on the ground. In such an application, the cyber security device may use the state of aircraft systems, for example, a sensor signal indicating the state of the aircraft (airborne, on the ground) based on weight on wheels or other sensors either connected to the safety-critical systems or directly to the cyber security device.

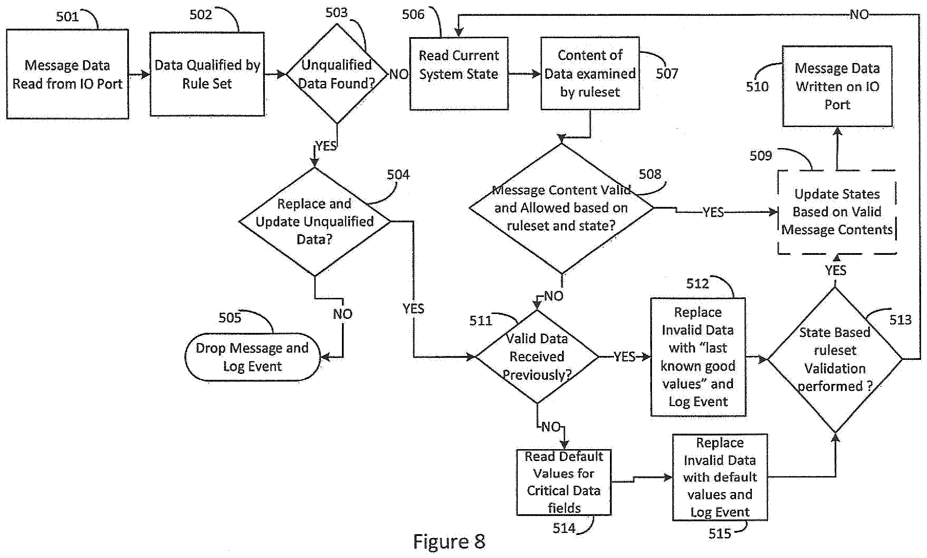

The process described above with reference to Fig. 7 is best suited for data messages that are not time-critical. For data messages that are time-critical (as discussed above with reference to Fig. 6), the process illustrated in Fig. 8 is advantageously implemented.

As illustrated, in an aspect, a data message is read from an I/O port (step 501). This may comprise a message from an I/O port operationally associated with either a non-real time communication interface 36 or a real-time interface 34 connected either to internal or external systems, depending on whether the message is inbound or outbound relative to the safety-critical control device. After the data message input to the I/O port is read, the data message is analyzed in a first process (step 502) (preferably byte-by-byte) by a rule-set, as described above, to determine the presence of malformed or unexpected data ("unqualified" data). If malformed or unqualified data are found ("YES" in a first decision step 503), a decision is made, in a second decision step 504, whether to replace and/or update the unqualified data. If the decision in the second decision step 504 is "NO," the message is deleted, and a log event may be created (step 505). If the decision in the second decision step 504 is "YES," the process proceeds to a fourth decision step 511, described below.

If no unqualified data are found as a result of the analysis performed in the above-mentioned step 502 (i.e., the data are well-formed), a "NO" result is obtained in the first decision step 503, and the process continues to step 506, in which the current system state is read, as described above with reference to Fig. 7. The process then examines the data content of the message (preferably byte-by-byte) in accordance with the rule-set and in light of the current system state (step 507), from which the process advances to a third decision step 508. In the third decision step 508, the process determines whether the message content is valid (i.e., in compliance with the validation criteria established by the rule-set), and thus allowed at that time. If the message content is valid and thus allowed ("YES" in the third decision step 508), the system state data in the cyber-security device 20 may optionally be updated based on the valid message contents (step 509), and the message data are written on the appropriate I/O port (step 510).

If third decision step 508 produces a "NO" outcome, meaning the message content is not valid (not in compliance with the validation criteria) and thus not allowed, the process proceeds to the above-mentioned fourth decision step 511 which determines whether a message data with a last-known "good" value has previously been received. If a last known "good" value is available from memory ("YES" in the fourth decision step 511), it is used to replace the corresponding invalid data value(s) in the message (step 512), and a log entry may advantageously be made. The process then proceeds to a fifth decision step 513, where it is determined whether a system state validation has been performed by the rule-set. If it has been performed ("YES" in the fifth decision step 513), the system state data in the cyber-security device may optionally be updated based on the valid message contents (step 509), and the valid message data are written on the appropriate I/O port (step 510). If it has not been performed ("NO" in the fifth decision step 513), the system returns to step 506 to read the current system state value, and repeats the above-described process from that point.

If a last-known "good" value is not available ("NO" in the fourth decision step 511), an appropriate default value is read from memory or storage (step 514) and is used to replace the invalid data value (step 515), and a log entry may advantageously be created. The process then proceeds to the fifth decision step 513, in which a "YES" outcome allows the process to write the message data on the I/O port (step 510) (optionally after the system state data update step 509), and in which a "NO" outcome returns the process to step 506 to read the current system state value, as described above. Thus, after either step 512 (replacement of invalid data by a last-known "good" value) or step 515 (replacement with a default value), the corrected or sanitized message is now deemed "validated" in accordance with the rule-set. The message is then directed to the fifth decision step 513, the "YES" and "NO" outcomes of which are described above.

Any of a large number of systems, states, and rule-sets are contemplated herein, and the specific applications described herein are exemplary only. One will understand from the disclosure herein that the cyber-security devices and methods disclosed herein may be readily adapted for use in a variety of applications, situations, and systems other than avionics systems, e.g., industrial control systems, energy management and distribution systems, remote monitoring systems, transportation control systems, medical systems and the like. Other concrete examples include railroads, ships, manufacturing and processing facilities (e.g., refineries), power stations, oil pipelines, and building HVAC, alarm, fire and other safety systems.

From the foregoing description, it will be appreciated, in some aspects, that cyber-security devices in accordance with this disclosure would typically be designed so that they cannot be configured or otherwise modified by users over internal or external interfaces without physical access to the device (due to needing access to the programming switch 46). Therefore, in accordance with such aspects, the security provided by the disclosed cyber-security devices cannot be overridden or by-passed, even if other protections are compromised. In other aspects, the cyber-security devices in accordance with this disclosure could be programmed and managed over either a remote or a local interface. In still another aspect, the cyber-security device can be operated in a learning mode and thus fielded to automatically build and modify a rule-set through processing all traffic in the system along with other inputs and using message analysis, heuristics, and other algorithms, such as machine learning. In the learning mode, the device can be updated continuously and automatically without the need for a programming mode or any external interface, or it may be combined with other modes of operation and authentication, if required. Furthermore, the learning mode can be implemented completely in non-volatile memory and with no permanent record, so that the security device can be fielded in a manner that it will not store any critical or secure information about the system it is protecting.

Significantly, cyber-security devices in accordance with aspects of this disclosure can provide bi-directional protection across all seven OSI model layers in an aspect. This is achieved through the use of segregated communication interfaces providing physical and data-link layer protection between each safety-critical control device and the other safety-critical control systems or external systems and networks. Furthermore, the cyber-security devices disclosed herein may advantageously protect the network and transport OSI model layers on any network or data bus. For instance, with Ethernet traffic, the cyber-security device protects these layers by limiting network data traffic to only the configured IP addresses and ports to and from each individual safety-critical control device. In addition, the cyber-security devices advantageously protect the session, presentation, and application OSI model layers through data validation and rule-sets that define what data can be sent to and from each safety-critical control based at least in part on the data content of communication traffic. Additionally, these layers can also be protected through encryption, which is supported in at least some aspects. Finally, the re-programmable feature described above allows the cyber-security devices disclosed herein to support custom rule-sets and configurations to tailor them to a wide variety of control devices and systems.

## Claims

1. A cyber-security device for providing secure communication of data in a system including a control device, wherein the system is operable in one or more system states, the cyber-security device comprising:
a processor operatively coupled to a memory and to a first communication interface and a second communication interface;
the first communication interface configured for accepting incoming messages destined for the control device and for bi-directional data communication between the processor and external networks or systems;
the second communication interface configured for accepting outgoing messages from the control device and for bi-directional data communication between the processor and the control device;
the memory configured to store current system state information and a rule-set comprising rules for qualifying and validating the incoming and the outgoing messages, wherein the rule-set includes a system state-dependent rule;
the processor configured to qualify and validate the incoming messages and the outgoing messages on a byte-by-byte basis;
wherein the processor is operable in an operational mode to:
accept messages received from one of the first communication interface and the second communication interface;
retrieve the rule-set from the memory;
qualify for message size and message type the received messages, including any received messages containing received system state information, on a byte-by-byte basis, based on compliance with the rule-set;
for any received message that has been qualified, validate message contents of the qualified received message, on a byte-by-byte basis, in accordance with the rule-set, wherein the qualified received message is validated by compliance with the system state-dependent rule in the rule-set based on the current system state information;
transmit the received messages to the other of the first communication interface and the second communication interface only if the received message is validated in compliance with the rule-set; and
update the current system state information based on the system state information in any validated message that includes received system state information,
when the received message cannot be validated, the processor is further operable to replace data in the received message that are not in compliance with the rule-set with data known to be in compliance with the rule-set, whereby the received message with the data known to be compliant with the rule-set is deemed validated.

2. The cyber-security device of claim 1, wherein the processor is operable in a programming mode in which the processor is operable to replace the rule-set in the memory with a new rule-set, and to cycle back to the operational mode after the new rule set is loaded from the memory.

3. The cyber-security device of claim 1, wherein the processor is further operable to block the received message when the received message cannot be validated.

4. The cyber-security device of claim 1, wherein, the processor is further operable in a learning mode in which the processor is operable to build or update rule-sets based on contents of received messages.

5. The cyber-security device of claim 4, wherein the data known to be in compliance with the rule-set are selected from one or more of data with default values, and data with last-known compliant values.

6. The cyber-security device of claim 5, wherein the data with last-known compliant values are determined from at least one previously-validated message or from an external data source.

7. The cyber-security device of claim 1, wherein the received system state information comes from at least one of the control device, an external system, and a secondary control device.

8. The cyber-security device of claim 1, wherein the processor is further operable for cross-domain processing of received messages across two or more security domain classifications.

9. A method of providing secure communication of messages to and from a control device in a system operable in any of several system states, wherein a current system state of the system is indicated by a current system state indication, the method comprising:
accepting incoming messages, bound for the control device, at a first communication interface that is in data communication with a processor operable to process messages with a rule-set that includes rules for qualifying the accepted incoming messages for message size and message type, and for validating message contents in the qualified incoming messages;
processing each accepted incoming message bound for the control device by operating the processor to implement the rule-set so as to qualify and validate, on a byte-by-byte basis, each accepted incoming message bound for the control device in accordance with the rule-set for message type, message size, message contents, and for compliance with a system state-dependent rule in the rule-set, based on the current system state indication;
sending only the incoming messages that are qualified and validated based on the rule-set to a second communication interface that is in data communication with the processor for transmission to the control device;
accepting outgoing messages from the control device at the second communication interface;
processing each accepted outgoing message from the control device by operating the processor to implement the rule-set so as to qualify and validate, on a byte-by-byte basis, each accepted outgoing message from the control device in accordance with the rule-set for message type, message size, message contents, and, for compliance with a system state-dependent rule in the rule-set, based on the current system state indication;
sending only the outgoing messages that are qualified and validated based on the rule-set to the first communication interface for bi-directional data communication between the processor and external networks or systems; and
updating the current system state indication based on any system state information included in any validated message,
the processor is further operable in a learning mode in which the processor is operable to build or update rule-sets based on contents of received messages,
when messages cannot be validated, the processor is further operable to replace data in the messages that are not in compliance with the rule-set with data known to be in compliance with the rule-set, whereby the messages with the data known to be compliant with the rule-set are deemed validated.

10. The method of claim 9, further comprising blocking incoming messages and outgoing messages that cannot be qualified and validated in accordance with the rule-set.

11. The method of claim 9, further comprising sanitizing incoming messages and outgoing messages that cannot be qualified and validated in accordance with the programmable rule-set by replacing data that are non-compliant with the rule-set with data known to be compliant with the rule-set.

12. The method of Claim 9, wherein the rule-set is a first rule-set, the method further comprising:
putting the processor into a programming mode in response to a mode-selection signal;
receiving a second rule-set while the processor is in the programming mode;
replacing the first rule-set with the second rule-set;
exiting the programming mode; and
processing future incoming messages and outgoing messages based on the second rule-set by operating the processor to implement the second rule-set so as to qualify and validate, on a byte-by-byte basis, each accepted incoming message and outgoing message in accordance with the second rule-set.

13. A control system that is operable in one or more system states and that includes a cyber-security functionality, the automation and control system comprising:
a control device;
a processor in data communication with the control device and a network, control system or device other than the control device;
a memory operatively associated with the processor and configured to store an indication of a current system state and a rule-set defining qualification and validation criteria for data contents of incoming data messages directed to the control device, and data contents of outgoing data messages directed from the control device;
wherein the processor is operable in an operational mode to process the incoming data messages and the outgoing data messages in accordance with the rule-set so as to (a) qualify, byte-by-byte, (i) the content of each of the incoming data messages as conforming to qualification criteria defined by the rule-set, and (ii) the content of each of the outgoing data messages as conforming to qualification criteria defined by the rule-set; (b) validate, byte-by-byte, the content of each qualified data message in accordance with validation criteria defined by the rule-set, and by compliance with a system state-dependent rule in the rule-set; (c) pass to or from the control device only data content (i) that has been qualified and validated, and (ii) that is deemed proper based on the indication of the current system state and the compliance of the qualified data message with the system state-dependent rule in the rule-set; and (d) update the indication of current system state based on any system state information contained in any qualified and validated data message
the processor is further operable in a learning mode in which the processor is operable to build or update rule-sets based on contents of received messages,
when the qualified data message cannot be validated, the processor is further operable to replace data in the data message that are not in compliance with the rule-set with data known to be in compliance with the rule-set, whereby the qualified data message with the data known to be compliant with the rule-set is deemed validated.

14. The system of claim 13, wherein the rule-set includes a first rule-set configured to process the incoming data messages, and a second rule-set configured to process the outgoing data messages, or alternatively
wherein the processor is further operable to block a message that cannot be validated.

## Patentansprüche

1. Cyber-Sicherheitsvorrichtung zum Bereitstellen einer sicheren Kommunikation von Daten in einem System umfassend ein Steuergerät, wobei das System in einem oder mehr Systemzuständen betreibbar ist, wobei die Cyber-Sicherheitsvorrichtung umfasst:
einen Prozessor, der zu einem Speicher und zu einer ersten Kommunikationsschnittstelle und einer zweiten Kommunikationsschnittstelle betrieblich gekuppelt ist
die erste Kommunikationsschnittstelle, dafür gestaltet eingehende Nachrichten zu akzeptieren, die für das Steuergerät und für die bidirektionale Datenkommunikation zwischen dem Prozessor und externen Netzwerken oder Systemen bestimmt sind;
die zweite Kommunikationsschnittstelle, dafür gestaltet ausgehende Nachrichten vom Steuergerät zu akzeptieren und für bidirektionale Datenkommunikation zwischen dem Prozessor und dem Steuergerät;
den Speicher, dafür gestaltet aktuelle Information über den Systemzustand zu speichern, sowie einen Regelsatz, der Regel umfasst für Qualifizierung und Validierung der eingehenden und der ausgehenden Nachrichten, wobei der Regelsatz eine systemzustandabhängige Regel einbezieht;
den Prozessor, dafür gestaltet die eingehenden Nachrichten und die ausgehenden Nachrichten Byte für Byte zu qualifizieren und validieren;
wobei der Prozessor in einem Betriebsmodus betreibbar ist um:
von der ersten Kommunikationsschnittstelle oder der zweiten Kommunikationsschnittstelle empfangene Nachrichten zu akzeptieren;
den Regelsatz vom Speicher abzurufen;
die empfangenen Nachrichten nach Nachrichtgrösse und Nachrichtart zu qualifizieren, einbeziehend etwaige empfangene Nachrichten, die empfangene Information über den Systemzustand enthalten, Byte für Byte, in Übereinstimmung mit dem Regelsatz;
für jede qualifizierte empfangene Nachricht, Nachrichtinhalte der qualifizierten empfangenen Nachricht Byte für Byte validieren, in Übereinstimmung mit dem Regelsatz, wobei die qualifizierte empfangene Nachricht in Übereinstimmung mit der systemzustandabhängige Regel im Regelsatz auf der Grundlage der aktuellen Information über den Systemzustand validiert wird;
die empfangenen Nachrichten an die andere der ersten Kommunikationsschnittstelle und der zweiten Kommunikationsschnittstelle nur zu übertragen, wenn die empfangene Nachricht in Übereinstimmung mit dem Regelsatz validiert ist; und
die aktuelle Information über den Systemzustand zu aufdatieren auf der Grundlage von Information über den Systemzustand in jeder validierten Nachricht, die empfangene Information über den Systemzustand einbezieht,
wenn die empfangene Nachricht nicht validiert werden kann ist der Prozessor ferner betreibbar um Daten in der empfangenen Nachricht, die nicht in Übereinstimmung mit dem Regelsatz sind, mit Daten, die bekanntlich in Übereinstimmung mit dem Regelsatz sind, zu ersetzen, wobei die empfangene Nachricht mit den Daten, die bekanntlich in Übereinstimmung mit dem Regelsatz sind, für validiert gehalten wird.

2. Cyber-Sicherheitsvorrichtung nach Anspruch 1, wobei der Prozessor in einem Programmiermodus betreibbar ist, in dem der Prozessor betreibbar ist um den Regelsatz im Speicher durch einen neuen Regelsatz zu ersetzen, und zum Betriebsmodus zurückzuwechseln nachdem der neue Regelsatz vom Speicher geholt wurde.

3. Cyber-Sicherheitsvorrichtung nach Anspruch 1, wobei der Prozessor ferner betreibbar ist um die empfangene Nachricht zu blockieren, wenn die empfangene Nachricht nicht validiert werden kann.

4. Cyber-Sicherheitsvorrichtung nach Anspruch 1, wobei der Prozessor ferner betreibbar ist in einem Lernmodus, worin der Prozessor betreibbar ist um Regelsätze auf Grundlage von Inhalten von empfangenen Nachrichten zu bauen oder aufdatieren.

5. Cyber-Sicherheitsvorrichtung nach Anspruch 4, wobei die Daten, die bekanntlich in Übereinstimmung mit dem Regelsatz sind, gewählt werden aus Daten mit Standardwerten und Daten mit den letztbekanntlich übereinstimmenden Werten.

6. Cyber-Sicherheitsvorrichtung nach Anspruch 5, wobei die Daten mit den letztbekanntlich übereinstimmenden Werten durch wenigstens eine bereits validierte Nachricht oder durch eine externe Datenquelle bestimmt sind.

7. Cyber-Sicherheitsvorrichtung nach Anspruch 1, wobei die empfangene Information über den Systemzustand von wenigstens dem Steuergerät und/oder einem externen System und/oder einem sekundären Steuergerät kommt.

8. Cyber-Sicherheitsvorrichtung nach Anspruch 1, wobei der Prozessor ferner betreibbar ist für domänenübergreifenden Betrieb von empfangenen Nachrichten über zwei oder mehr Sicherheitsdomänenklassifizierungen.

9. Verfahren zum Bereitstellen sicherer Kommunikation von Nachrichten an und von einem Steuergerät in einem System, das in mehreren Systemzuständen betreibbar ist, wobei ein aktueller Systemzustand des Systems angegeben wird durch eine Angabe über den aktuellen Systemzustand, wobei das Verfahren umfasst:
Akzeptieren von für das Steuergerät bestimmten, eingehenden Nachrichten an einer ersten Kommunikationsschnittstelle, die in Datenkommunikation mit einem Prozessor steht, der betreibbar ist um Nachrichten zu verarbeiten mit einem Regelsatz, der Regeln für die Qualifizierung der akzeptierten eingehenden Nachrichten in Bezug auf Nachrichtgrösse und Nachrichtart einbezieht, und für die Validierung von Nachrichtinhalten der qualifizierten eingehenden Nachrichten;
Verarbeiten von jeder für das Steuergerät bestimmten, akzeptierten eingehenden Nachricht durch Betreiben des Prozessors um den Regelsatz zu implementieren um jede für das Steuergerät bestimmte, akzeptierte eingehende Nachricht in Übereinstimmung mit dem Regelsatz für Nachrichtart, Nachrichtgrösse, Nachrichtinhalte zu qualifizieren und validieren, Byte für Byte, und um mit einer systemzustandabhängigen Regel im Regelsatz zu übereinstimmen, auf Grundlage der aktuellen Systemzustandangaben;
Übersenden von nur auf Grundlage des Regelsatzes qualifizierten und validierten eingehenden Nachrichten an eine zweite Kommunikationsschnittstelle, die in Datenkommunikation mit dem Prozessor steht für Übertragung an das Steuergerät;
Akzeptieren von ausgehenden Nachrichten vom Steuergerät an der zweiten Kommunikationsschnittstelle;
Verarbeiten von jeder akzeptierten ausgehenden Nachricht vom Steuergerät durch Betrieb des Prozessors um den Regelsatz so zu implementieren, dass jede akzeptierte ausgehende Nachricht vom Steuergerät in Übereinstimmung mit dem Regelsatz für Nachrichtart, Nachrichtgrösse, Nachrichtinhalte Byte für Byte qualifiziert und validiert wird, und mit einer systemzustandabhängigen Regel im Regelsatz auf Grundlage der aktuellen Systemzustandangaben übereinstimmt;
Übersenden von nur den ausgehenden Nachrichten, die auf Grundlage des Regelsatzes qualifiziert und validiert sind, an die erste Kommunikationsschnittstelle für bidirektionale Datenkommunikation zwischen dem Prozessor und externen Netzwerken und Systemen; und
Aufdatieren der aktuellen Systemzustandangabe auf Grundlage jeglicher Information über den Systemzustand, die in jeglicher validierten Nachricht einbezogen ist,
der Prozessor ist ferner in einem Lernmodus betreibbar, worin der Prozessor betreibbar ist um Regelsätze zu bauen oder zu aufdatieren auf Grundlage von Inhalten von empfangenen Nachrichten, wenn Nachrichten nicht validiert werden können ist der Prozessor ferner betreibbar um Daten in den Nachrichten, die nicht in Übereinstimmung mit dem Regelsatz sind, durch Daten, die bekanntlich in Übereinstimmung mit dem Regelsatz sind, zu ersetzen, wobei die Nachrichten mit den Daten, die bekanntlich mit dem Regelsatz übereinstimmen, als validiert gehalten werden.

10. Verfahren nach Anspruch 9, ferner umfassend eine Blockierung von eingehenden Nachrichten und ausgehenden Nachrichten, die nicht in Übereinstimmung mit dem Regelsatz qualifiziert und validiert werden können.

11. Verfahren nach Anspruch 9, ferner umfassend eine Reinigung von eingehenden Nachrichten und ausgehenden Nachrichten, die nicht in Übereinstimmung mit dem programmierbaren Regelsatz qualifiziert und validiert werden können, durch eine Ersetzung von Daten, die nicht mit dem Regelsatz übereinstimmen, durch Daten, die bekanntlich mit dem Regelsatz übereinstimmen.

12. Verfahren nach Anspruch 9, wobei der Regelsatz ein erster Regelsatz ist, wobei das Verfahren ferner umfasst:
den Prozessor in einen Programmiermodus schalten als Reaktion auf ein Modusauswahlsignal;
Aufnahme eines zweiten Regel satzes während der Prozessor im Programmiermodus ist;
Ersetzung des ersten Regelsatzes durch den zweiten Regelsatz;
Heraustreten aus dem Programmiermodus; und
Verarbeiten künftiger eingehender Nachrichten und ausgehender Nachrichten auf Grundlage des zweiten Regelsatzes durch Betrieb des Prozessors um den zweiten Regelsatz so zu implementieren, dass jede akzeptierte eingehende Nachricht und ausgehende Nachricht in Übereinstimmung mit dem zweiten Regelsatz Byte für Byte qualifiziert und validiert wird.

13. Kontrollsystem, das in einem oder mehr Systemzuständen betreibbar ist und eine Cyber-Sicherheitsfunktionalität einbezieht, wobei das Automations- und Kontrollsystem umfasst:
ein Steuergerät;
einen Prozessor, der mit dem Steuergerät und einem Netzwerk, Kontrollsystem oder Gerät ausser dem Steuergerät in Datenkommunikation steht;
einen Speicher, der mit dem Prozessor betrieblich verbunden ist und dafür gestaltet ist eine Angabe über einen aktuellen Systemzustand zu speichern, sowie auch einen Regelsatz, der Qualifizierungs- und Validierungskriterien absteckt für Dateninhalte von eingehenden Datennachrichten, die an das Steuergerät gerichtet sind, und Dateninhalte von ausgehenden Datennachrichten, die vom Steuergerät gerichtet sind;
wobei der Prozessor in einem Betriebsmodus betreibbar ist um die eingehenden Datennachrichten und die ausgehenden Datennachrichten in Übereinstimmung mit dem Regelsatz zu verarbeiten, so dass der Prozessor (a) qualifiziert, Byte für Byte, (i) den Inhalt jeder der eingehenden Datennachrichten in Übereinstimmung mit durch den Regelsatz abgesteckten Qualifizierungskriterien, und (ii) den Inhalt jeder der ausgehenden Datennachrichten in Übereinstimmung mit durch den Regelsatz abgesteckten Qualifizierungskriterien; (b) validiert, Byte für Byte, den Inhalt jeder qualifizierten Datennachricht in Übereinstimmung mit durch den Regelsatz abgesteckten Validierungskriterien, und in Übereinstimmung mit einer systemzustandabhängigen Regel im Regelsatz; (c) an oder vom Steuergerät nur Dateninhalt passieren lässt, (i) der qualifiziert und validiert wurde, und (ii) der für ordnungsgemäss gehalten wird auf Grundlage der aktuellen Systemzustandangabe und der Übereinstimmung der qualifizierten Datennachricht mit der systemzustandabhängigen Regel im Regelsatz; und (d) die Angabe der aktuellen Systemzustand aufdatiert auf Grundlage jeder Information über den Systemzustand in jeder qualifizierten und validierten Datennachricht
wobei der Prozessor ferner in einem Lernmodus betreibbar ist, wobei der Prozessor betreibbar ist um Regelsätze zu bauen oder aufdatieren auf Grundlage von Inhalten von empfangenen Nachrichten, wenn Nachrichten nicht validiert werden können, wobei der Prozessor ferner betreibbar ist um Daten in den Nachrichten, die nicht mit dem Regelsatz übereinstimmt, durch Daten, die bekanntlich mit dem Regelsatz übereinstimmt, zu ersetzen, wobei die Nachrichten mit den mit dem Regelsatz bekanntlich übereinstimmenden Daten als validiert gelten.

14. System nach Anspruch 13, wobei der Regelsatz einen ersten Regelsatz einbezieht, der dafür gestaltet ist die eingehenden Datennachrichten zu verarbeiten, und einen zweiten Regelsatz, der dafür gestaltet ist, die ausgehenden Datennachrichten zu verarbeiten, oder ersatzweise
wobei der Prozessor ferner betreibbar ist um eine Nachricht, die nicht validiert werden kann, zu blockieren.

## Revendications

1. Dispositif de cybersécurité pour assurer une communication de données sécurisée dans un système incluant un dispositif de contrôle, dans lequel le système est fonctionnable dans au moins un état de système, le dispositif de cybersécurité comprenant:
un processeur couplé de manière opérationnelle à une mémoire et à une première interface de communication et une deuxième interface de communication;
la première interface de communication étant configurée pour accepter des messages entrants destinés pour le dispositif de contrôle et pour la communication de données bidirectionnelle entre le processeur et des réseaux ou des système externes;
la deuxième interface de communication étant configurée pour accepter des messages sortants du dispositif de contrôle et pour la communication de données bidirectionnelle entre le processeur et le dispositif de contrôle;
la mémoire étant configurée pour stocker de l'information actuelle d'état de système et un ensemble de règles pour qualifier et valider les messages entrants et sortants, où l'ensemble de règles comporte un système de règle de dépendance d'état;
le processeur étant configuré pour qualifier et valider les messages entrants et les messages sortants sur une base d'octet par octet;
dans lequel le processeur est fonctionnable dans un mode opérationnel pour:
accepter des messages reçus de l'une des première et deuxième interfaces de communication;
retirer l'ensemble de règles de la mémoire;
qualifier pour la taille de message et le type de message les messages reçus, comportant des messages reçus quelconques contenant de l'information d'état de système reçu, sur une base d'octet par octet, basées sur la conformité avec l'ensemble de règles;
pour un message quelconque qui a été qualifié, valider des contenus de message du message reçu qualifié, sur une base d'octe par octet, en conformité avec l'ensemble de règles, dans lequel le message reçu qualifié est validé en conformité avec le système de règles de dépendance d'état dans l'ensemble de règles basé sur l'information actuelle d'état de système;
transmettre les messages reçus à l'autre des première et deuxième interface de communication uniquement au cas où le message reçu est validé en conformité avec l'ensemble de règles; et
mettre à jour l'information actuelle d'état de système basée sur l'information d'état de système dans un message validé quelconque qui comporte de l'information d'état de système reçu,
lorsque le message reçu ne peut pas être validé, le processeur est en outre en fonction de remplacer des données dans un message reçu qui ne sont pas en conformité avec l'ensemble de règles avec des données connues pour être en conformité avec l'ensemble de règles, par quel moyen le message reçu avec les données connues d'être en conformité avec l'ensemble de règles est jugé validé.

2. Dispositif de cybersécurité selon la revendication 1, où le processeur est fonctionnable dans un mode de programmation dans lequel le processeur est fonctionnable pour remplacer l'ensemble de règles dans la mémoire avec un nouvel ensemble de règles, et retourner au mode de programmation après que le nouvel ensemble de règles est chargé de la mémoire.

3. Dispositif de cybersécurité selon la revendication 1, où le processeur est en outre en fonction de bloquer le message reçu lorsque le message reçu ne peut pas être validé.

4. Dispositif de cybersécurité selon la revendication 1, où le processeur est en outre en fonction, dans un mode d'apprentissage dans lequel le processeur est fonctionnable, de construire ou mettre à jour des ensembles de règles basés sur le contenu de messages reçus.

5. Dispositif de cybersécurité selon la revendication 4, où les données connues d'être en conformité avec l'ensemble de règles, sont sélectionnées à partir d'une ou plusieures données avec des valeurs par défaut, et des données avec des dernières connues valeurs conformes.

6. Dispositif de cybersécurité selon la revendication 5, où les données, avec des dernières connues valeurs conformes, sont déterminées à partir d'au moins un message préalablement validé ou d'une source de données externe.

7. Dispositif de cybersécurité selon la revendication 1, où le système d'information d'état reçu vient d'au moins l'un parmi un dispositif de contrôle, un système externe, et un dispositif de contrôle secondaire.

8. Dispositif de cybersécurité selon la revendication 1, où le processeur est en outre fonctionnable pour le traitement multi domaine de messages reçus à travers deux ou plusieures classifications de domaine de sécurité.

9. Procédé pour assurer une communicatoin sécurisée de messages envoyés dans un dispositif de contrôle dans un système fonctionnable dans l'un quelconque de plusieurs états de système, dans lequel un état de système actuel du système est indiqué par une indication actuelle d'état de système, le procédé comprenant:
l'acceptation de messages entrants, destinés pour le dispositif de contrôle, à une première interface de communication qui est en communication de données avec un processeur en fonction de traiter des messages avec un ensemble de règles qui comporte des règles pour qualifier les messages entrants acceptés au niveau de taille de message et de type de message, et pour valider des contenus des messages dans les messages entrants qualifiés;
le traitement de chaque message entrant acccepté destiné au dispositif de contrôle en opérant le processeur pour mettre en oeuvre l'ensemble de règles de manière à qualifier et valider, sur une base d'octet par octet, chaque message entrant accepté destiné pour le dispositif de contrôle en conformité avec l'ensemble de règles pour le type de message, la taille de message, les contenus des messages, et pour être en conformité avec un système de règle lié à l'état, basé sur l'indication actuelle d'état de système;
l'envoi uniquement des messages entrants qui sont qualifiés et validés à la base de l'ensemble de règles à une deuxième interface de communication qui est en communications de données avec le processeur pour la transmission au dispositif de contrôle;
l'acceptation de messages sortants du dispositif de contrôle à la deuxième interface de communication;
le traitement de chaque message sortant accepté du dispositif de contrôle par l'opération du processeur pour mettre en oeuvre l'ensemble de règles de manière à qualifier et valider, sur une base d'octet par octet, chaque message sortant accepté du dispositif de contrôle en conformité avec l'ensemble de règles au niveau de type de message, de taille de message, de contenus des messages, et, pour être en conformité avec un système de règle de dépendance d'état, basé sur l'indication actuelle d'état de système;
l'envoi uniquement des messages sortants qui sont qualifiés et validés à la base de l'ensemble de règles à la première interface de communication pour la communication de données bidirectionnelle entre le processeur et des réseaux ou des système externes; et
la mise à jour de l'indication actuelle d'état de système basée sur une quelconque information d'état de système inclue dans un quelconque message validé,
le processeur est en outre fonctionnable dans un mode d'apprentissage dans lequel le processeur est en fonction de construire ou mettre à jour des ensembles de règles basés sur des contenus de messages reçus, lorsque des messages ne peuvent pas être validés, le processeur est en outre en fonction de remplacer des données dans les messages qui ne sont pas en conformité avec l'ensemble de règles avec des données connues pour être en conformité avec l'ensemble de règles, par quel moyen les messages avec les données connues pour être en conformité avec l'ensemble de règles sont jugés validés.

10. Procédé selon la revendication 9, comprenant en outre le blocage de messages entrants et sortants qui ne peuvente être qualifiés et validés en conformité avec l'ensemble de règles.

11. Procédé selon la revendication 9, comprenant en outre l'assainissement de messages entrants et sortants qui ne peuvent pas être qualifiés et validés en conformité avec l'ensemble de règles programmable en remplacant des données qui sont non conforme avec l'ensemble de règles avec des données connues d'être conformes avec l'ensemble de règles.

12. Procédé selon la revendication 9, oùl'ensemble de règles est un premier ensemble de règles, le procédé comprenant en outre:
de mettre le processeur en mode de programmation en réponse à un signal de sélection de mode;
de recevoir un deuxième ensemble de règles lorsque le processeur est en mode de programmation;
de remplacer le premier ensemble de règles avec le deuxième ensemble de règles;
sortir du mode de programmation; et
traiter des futures messages entrants et sortants à la base du deuxième ensemble de règles en utilisant le processeur pour mettre en place le deuxième ensemble de règles de manière à qualifier et valider, sur une base d'octe par octet, chaque message entrant accepté et chaque message sortant accepté en conformité avec le deuxième ensemble de règles.

13. Système de contrôle qui est fonctionnable dans un ou plusieurs systèmes d'état et qui comporte une fonction de cybersécurité, le système d'automatisation et de contrôle comprenant:
un dispositif de contrôle;
un processeur en communication de données avec le dispositif de contrôle et un réseau, un système de contrôle ou un dispositif autre que le dispositif de contrôle;
une mémoire associée operationnellement avec le processeur et configurée pour stocker une indication actuelle d'un état de système et un ensemble de règles définissant des critères de qualification et de validation pour des contenus de données de messages de données entrants dirigés au dispositif de contrôle, et des contenus de données de messages de données sortants dirigés du dispositif de contrôle;
où le processeur est en fonction, dans un mode opérationnel, de traiter les messages de données entrants et les messages de données sortants conformément à l'ensemble de règles de manière à (a) qualifier, octet par octet, (i) le contenu de chacun des messages de données entrants en conformité avec des critères de qualification définis par l'ensemble de règles, et (ii) le contenu de chacun des messages de données sortants en conformité avec des critères de qualification définis par l'ensemble de règles; (b) de valider, octet par octet, le contenu de chaque message de donnée qualifié en conformité avec des critères de validation définis par l'ensemble de règles, et conformément à un système de règle de dépendance d'état dans l'ensemble de règles; (c) de passer à ou du dispositif de contrôle uniquement du contenu de données (i) qui a été qualifié et validé, et (ii) qui est jugé approprié à la base de l'indication actuelle de l'état de système et la conformité du message de données qualifié avec le système de règle de dépendance d'état dans l'ensemble de règles; et (d) de mettre à jour l'indication actuelle de système d'état à la base d'un quelconque système d'information d'état contenu dans un message de données validé quelconque,
le processeur est en outre en fonction, dans un mode d'apprentissage dans lequel le processeur est opérable, de construire ou mettre à jour des ensembles de règles basés sur des contenus de messages reçus, lorsque le message de données qualifié ne peut pas être validé, le processeur est en outre en fonction de remplacer des données dans le message de données qui n'est pas en conformité avec l'ensemble de règles avec des données connues d'être en conformité avec l'ensemble de règles, par quoi le message de données qualifé avec les données connues d'être en conformité avec l'ensemble de règles est jugé validé.

14. Système selon la revendication 13, où l'ensemble de règles comporte un premier ensemble de règles configuré pour traiter les messages de données entrants, et un deuxième ensemble de règles configuré pour traiter les messages de données sortants, ou altenativement, où le processeur est en outre en fonction de bloquer un message qui ne peut pas être validé.
